# EUROPEAN PATENT APPLICATION

(11) **EP 4 650 123 A1**
(43) Date of publication of application: **19.11.2025**
(21) Application number: 25175855.3
(22) Date of filing: 12.05.2025
(51) Int. Cl.: B25J 11/00, B25J 15/00

(54) **QUICK CHANGE ROBOTIC COUPLING SYSTEMS AND ADAPTERS AND ROBOTIC WELDING SYSTEMS HAVING QUICK CHANGE ROBOTIC COUPLING SYSTEMS AND ADAPTERS**

(30) Priority: 13.05.2024 US 202463646139 P; 07.05.2025 US 202519201207
(71) Applicant: Illinois Tool Works Inc., Glenview IL 60025 (US)
(72) Inventor: WHIPPLE, Brad, Glenview, 60025 (US); LIZOTTE, Ryan, Glenview, 60025 (US)
(74) Representative: HGF

(57) **Abstract**

A quick change coupling system configured to couple components of a welding system comprises: a first adapter comprising a first tapered extension extending from a first outside diameter of the first adapter, the first tapered extension defining a second outside diameter of the first adapter greater than the first outside diameter of the first adapter; a second adapter comprising a second tapered extension extending from a third outside diameter of the second adapter, the second tapered extension defining a fourth outside diameter of the second adapter greater than the third outside diameter of the second adapter; and an intermediate lock configured to couple the first adapter and the second adapter by fastening the first tapered extension of the first adapter together with the second tapered extension of the second adapter.

## Description

### RELATED APPLICATIONS

The present application claims the benefit of U.S. Provisional Patent Application Serial No. 63/646,139, filed May 13, 2024, entitled "QUICK CHANGE ROBOTIC COUPLING SYSTEMS AND ADAPTERS AND ROBOTIC WELDING SYSTEMS HAVING QUICK CHANGE ROBOTIC COUPLING SYSTEMS AND ADAPTERS." The entirety of U.S. Provisional Patent Application Serial No. 63/646,139 is expressly incorporated herein by reference.

### FIELD OF THE DISCLOSURE

This disclosure relates generally to robotic coupling systems and adapters and, more particularly, to quick change robotic coupling systems and adapters and robotic welding systems having quick change robotic coupling systems and adapters.

### BACKGROUND

Welding systems often include robotic manipulators coupled to welding torches to control the welding torches during a welding operation. Accordingly, such robotic manipulators often require a coupling mechanism to couple the robotic manipulators to their associated welding torches. However, conventional couplers are often difficult, time-consuming, and/or labor-and/or material-intensive to install or replace. Accordingly, installing or replacing conventional couplers can result in significant interruptions to a welding operation.

### SUMMARY

Quick change robotic coupling systems and adapters and robotic welding systems having quick change robotic coupling systems and adapters are disclosed, substantially as illustrated by and described in connection with at least one of the figures and as set forth in the claims.

### BRIEF DESCRIPTION OF THE DRAWINGS

FIG. 1 illustrates an example robotic welding system including a plurality of robotic coupling systems coupling a robotic manipulator, intermediate component, and torch assembly, in accordance with aspects of this disclosure;
FIGS. 2A and 2B illustrate assembled and exploded views, respectively, of components of example quick change robotic coupling systems coupling a robotic manipulator, an auxiliary device, and a torch connector, in accordance with aspects of this disclosure;
FIGS. 3A and 3B illustrate perspective and side profile views of an example adapter coupled to a connecting component, in accordance with aspects of this disclosure;
FIG. 4 illustrates example adapters and an example intermediate lock of an example quick change robotic coupling system, in accordance with aspects of this disclosure;
FIG. 5 illustrates an example adapter having a tapered extension and an outwardly-facing surface defining a tapering angle, in accordance with aspects of this disclosure;
FIG. 6 illustrates an example adapter integrally formed from a connecting component, in accordance with aspects of this disclosure; and
FIGS. 7A-7C illustrate example configurations of quick change robotic coupling systems coupling components of welding systems, in accordance with aspects of this disclosure.

The figures are not necessarily to scale. Where appropriate, similar or identical reference numbers are used to refer to similar or identical components.

### DETAILED DESCRIPTION

Robotic welding torches are electrically insulated from the robotic manipulator to which the welding torch is attached using an insulating adapter, to avoid applying a welding voltage to the robotic manipulator. In the event of a collision by the welding torch, the insulator may also serve as a sacrificial component to prevent damage to the welding torch or the robotic manipulator. Conventional insulators are time-consuming to install and replace, and involve removing the welding torch to access fasteners and/or other installation components. As a result, collisions can result in significant and unexpected stoppages or down time for the robotic manipulator, which is costly to the owner or operator of the robotic welding system. As a consequence, minor damage to components (e.g.,, a crack in an insulator) may go ignored or unaddressed due to the costs associated with accessing and replacing such components.

Disclosed example quick change robotic coupling systems and adapters provide improved coupling mechanisms for robotic manipulators, welding torches, and/or other welding system components. Disclosed example quick change robotic coupling systems and adapters provide an insulating adapter which insulates a robotic manipulator or other component of a welding system from electrical potentials at the welding torch. Disclosed example quick change robotic coupling systems may also provide reduced component counts and simplified disassembly and reassembly processes, thereby significantly reducing difficulty and downtime associated with assembling such quick change robotic coupling systems. For example, in contrast with conventional robotic welding systems in which removing a welding torch mount involves removing and reinstalling a series of components starting from the front of the robotic welding system and moving rearward, disclosed examples allow an operator to separate components at the location of the welding torch mount and reattach the components at the location of the mount.

Disclosed example quick change coupling systems include: a first adapter comprising a first tapered extension extending from a first outside diameterof the first adapter, the first tapered extension defining a second outside diameter of the first adapter greater than the first outside diameter of the first adapter; a second adapter comprising a second tapered extension extending from a third outside diameter of the second adapter, the second tapered extension defining a fourth outside diameter of the second adapter greater than the third outside diameter of the second adapter; and an intermediate lock configured to couple the first adapter and the second adapter by fastening the first tapered extension of the first adapter together with the second tapered extension of the second adapter.

In some example quick change coupling systems, the first adapter defines a first outwardly-facing surface at the first outside diameter; the first tapered extension comprises a first tapered face; and the first tapered face and the first outwardly-facing surface define a first tapering angle. In some such example quick change coupling systems, the first tapering angle is greater than or equal to 120 degrees and less than 180 degrees. In some example quick change coupling systems, the first adapter defines a first outwardly-facing surface at the first outside diameter; the first tapered extension comprises a first tapered face; the first tapered face and the first outwardly- facing surface define a first tapering angle; and the second adapter defines a second outwardly- facing surface at the second outside diameter; the second tapered extension comprises a second tapered face; the second tapered face and the second outwardly-facing surface define a second tapering angle; and the intermediate lock engages with the first tapered face of the first adapter and the second tapered face of the second adapter when the intermediate lock fastens the first tapered extension together with the second tapered extension.

In some example quick change coupling systems, the first adapter defines a first interior diameter and a first interior abutment face extending from the first interior diameter to the second outside diameter; the second adapter defines a second interior diameter and a second interior abutment face extending from the second interior diameter to the fourth outside diameter; and the intermediate lock is configured to lock the first interior abutment face to the second interior abutment face. In some such example quick change coupling systems, when the intermediate lock fastens the first tapered extension together with the second tapered extension, the first interior abutment face is seated against the second interior abutment face.

In some example quick change coupling systems, the first adapter is an insulating adapter. In some such example quick change coupling systems, the insulating adapter comprises a first stress tolerance; and the second adapter comprises a second stress tolerance higher than the first stress tolerance. In some example quick change coupling systems, the quick change coupling system further includes an alignment pin, wherein: the first adapter further comprises a first alignment hole; the second adapter further comprises a second alignment hole; and the first and second alignment holes are configured to align the first adapter and the second adapter when the alignment pin extends through the first and second alignment holes.

In some example quick change coupling systems, the intermediate lock comprises a compression fitting. In some example quick change coupling systems, the intermediate lock comprises a tapered seat configured to hold both the first tapered extension of the first adapter and the second tapered extension of the second adapter when the first adapter and the second adapter are fastened together by the intermediate lock. In some example quick change coupling systems, the intermediate lock is a split clamp comprising a first section and a second section bolted together by one or more clamp bolts. In some example quick change coupling systems, the intermediate lock comprises a fastening clamp comprising a cam lock configured to close the fastening clamp. In some example quick change coupling systems, the intermediate lock comprises a first quarter turn component and a second quarter turn component configured to fasten to the first quarter turn component by being turned. In some example quick change coupling systems, the intermediate lock comprises a fastening clamp comprising a hinge configured to pivotally couple a first section of the fastening clamp to a second section of the fastening clamp.

In a first group of examples, disclosed example welding systems include: a robotic manipulator comprising a robot face; a first adapter configured to couple to the robot face, the first adapter comprising a first tapered extension extending from a first outside diameter of the first adapter, the first tapered extension defining a second outside diameter of the first adapter greater than the first outside diameter of the first adapter; a first auxiliary device comprising a first connector face; a second adapter configured to couple to the first connector face of the first auxiliary device, the second adapter comprising a second tapered extension extending from a third outside diameter of the second adapter, the second tapered extension defining a fourth outside diameter of the second adapter greater than the third outside diameter of the second adapter; and a first intermediate lock configured to couple the robotic manipulator to the first auxiliary device by fastening the first tapered extension of the first adapter together with the second tapered extension of the second adapter.

In some example welding systems of the first group of examples, the welding system further includes: a third adapter configured to couple to a second connector face of the first auxiliary device, the third adapter comprising a third tapered extension extending from a fifth outside diameter of the third adapter, the third tapered extension defining a sixth outside diameter of the third adapter greater than the fifth outside diameter of the third adapter; a second auxiliary device comprising a third connector face; a fourth adapter configured to couple to the third connector face of the second auxiliary device, the fourth adapter comprising a fourth tapered extension extending from a seventh outside diameter of the fourth adapter, the fourth tapered extension defining an eighth outside diameter of the fourth adapter greater than the seventh outside diameter of the fourth adapter; and a second intermediate lock configured to couple the first auxiliary device and the second auxiliary device by fastening the third tapered extension of the third adapter together with the fourth tapered extension of the fourth adapter. In some example welding systems of the first group of examples, the first auxiliary device comprises at least one of a torch connector, a clutch, a machine vision system, or a spacer. In some example welding systems of the first group of examples, the welding system further includes a plurality of bolts, wherein the second adapter comprises a plurality of fastening holes and each bolt of the plurality of bolts extends through a respective fastening hole of the plurality of fastening holes for connection to the first auxiliarydevice. In some example welding systems of the first group of examples, the welding system further includes a plurality of bolts, wherein the first adapter comprises a plurality of fastening holes and each bolt of the plurality of bolts extends through a respective fastening hole of the plurality of fastening holes for connection to the robot face.

In some example welding systems of the first group of examples, the first adapter defines a first outwardly-facing surface at the first outside diameter; the first tapered extension comprises a first tapered face; and the first tapered face and the first outwardly-facing surface define a first tapering angle. In some such example welding systems of the first group of examples, the first tapering angle is greater than or equal to 120 degrees and less than 180 degrees. In some example welding systems of the first group of examples, the first adapter defines a first outwardly-facing surface at the first outside diameter; the first tapered extension comprises a first tapered face; the first tapered face and the first outwardly-facing surface define a first tapering angle; and the second adapter defines a second outwardly-facing surface at the second outside diameter; the second tapered extension comprises a second tapered face; the second tapered face and the second outwardly-facing surface define a second tapering angle; and the intermediate lock engages with the first tapered face of the first adapter and the second tapered face of the second adapter when the intermediate lock fastens the first tapered extension together with the second tapered extension.

In some example welding systems of the first group of examples, the first adapter defines a first interior diameter and a first interior abutment face extending from the first interior diameter to the second outside diameter; the second adapter defines a second interior diameter and a second interior abutment face extending from the second interior diameter to the fourth outside diameter; and the intermediate lock is configured to lock the first interior abutment face to the second interior abutment face. In some such example welding systems of the first group of examples, when the intermediate lock fastens the first tapered extension together with the second tapered extension, the first interior abutment face is seated against the second interior abutment face.

In some example welding systems of the first group of examples, the first adapter is an insulating adapter. In some such example welding systems of the first group of examples, the insulating adapter comprises a first stress tolerance; and the second adapter comprises a second stress tolerance higher than the first stress tolerance. In some example welding systems of the first group of examples, the welding system further includes an alignment pin, wherein: the first adapter further comprises a first alignment hole; the second adapter further comprises a second alignment hole; and the first and second alignment holes are configured to align the first adapter and the second adapter when the alignment pin extends through the first and second alignment holes.

In some example welding systems of the first group of examples, the intermediate lock comprises a compression fitting. In some example welding systems of the first group of examples, the intermediate lock comprises a tapered seat configured to hold both the first tapered extension of the first adapter and the second tapered extension of the second adapter when the first adapter and the second adapter are fastened together by the intermediate lock. In some example welding systems of the first group of examples, the intermediate lock is a split clamp comprising a first section and a second section bolted together by one or more clamp bolts. In some example welding systems of the first group of examples, the intermediate lock comprises a fastening clamp comprising a cam lock configured to close the fastening clamp. In some example welding systems of the first group of examples, the intermediate lock comprises a first quarter turn component and a second quarter turn component configured to fasten to the first quarter turn component by being turned. In some example welding systems of the first group of examples, the intermediate lock comprises a fastening clamp comprising a hinge configured to pivotally couple a first section of the fastening clamp to a second section of the fastening clamp.

In a second group of examples, disclosed example welding systems include a robotic manipulator comprising a robot face; a first adapter configured to couple to the robot face, the first adapter comprising a first tapered extension extending from a first diameter of the first adapter, the first tapered extension defining a second diameter of the first adapter greater than the first diameter of the first adapter; a first auxiliary device comprising a second adapter, the second adapter comprising a second tapered extension extending from a third diameter of the second adapter, the second tapered extension defining a fourth diameter of the second adapter greater than the third diameter of the second adapter; and a first intermediate lock configured to couple the robotic manipulator to the first auxiliary device by fastening the first tapered extension of the first adapter together with the second tapered extension of the second adapter.

In some example welding systems of the second group of examples, the welding system further includes: a third adapter configured to couple to a second connector face of the first auxiliary device, the third adapter comprising a third tapered extension extending from a fifth outside diameter of the third adapter, the third tapered extension defining a sixth outside diameter of the third adapter greater than the fifth outside diameter of the third adapter; a second auxiliary device comprising a third connector face; a fourth adapter configured to couple to the third connector face of the second auxiliary device, the fourth adapter comprising a fourth tapered extension extending from a seventh outside diameter of the fourth adapter, the fourth tapered extension defining an eighth outside diameter of the fourth adapter greater than the seventh outside diameter of the fourth adapter; and a second intermediate lock configured to couple the first auxiliary device and the second auxiliary device by fastening the third tapered extension of the third adapter together with the fourth tapered extension of the fourth adapter. In some example welding systems of the second group of examples, the first auxiliary device comprises at least one of a torch connector, a clutch, a machine vision system, or a spacer. In some example welding systems of the second group of examples, the welding system further includes a plurality of bolts, wherein the first adapter comprises a plurality of fastening holes and each bolt of the plurality of bolts extends through a respective fastening hole of the pluralityof fastening holes for connection to the robot face.

In some example welding systems of the second group of examples, the first adapter defines a first outwardly-facing surface at the first outside diameter; the first tapered extension comprises a first tapered face; and the first tapered face and the first outwardly-facing surface define a first tapering angle. In some such example welding systems of the second group of examples, the first tapering angle is greater than or equal to 120 degrees and less than 180 degrees. In some example welding systems of the second group of examples, the first adapter defines a first outwardly-facing surface at the first outside diameter; the first tapered extension comprises a first tapered face; the first tapered face and the first outwardly-facing surface define a first tapering angle; and the second adapter defines a second outwardly-facing surface at the second outside diameter; the second tapered extension comprises a second tapered face; the second tapered face and the second outwardly-facing surface define a second tapering angle; and the intermediate lock engages with the first tapered face of the first adapter and the second tapered face of the second adapter when the intermediate lock fastens the first tapered extension together with the second tapered extension.

In some example welding systems of the second group of examples, the first adapter defines a first interior diameter and a first interior abutment face extending from the first interior diameter to the second outside diameter; the second adapter defines a second interior diameter and a second interior abutment face extending from the second interior diameter to the fourth outside diameter; and the intermediate lock is configured to lock the first interior abutment face to the second interior abutment face. In some such example welding systems of the second group of examples, when the intermediate lock fastens the first tapered extension together with the second tapered extension, the first interior abutment face is seated against the second interior abutment face.

In some example welding systems of the second group of examples, the first adapter is an insulating adapter. In some such example welding systems of the second group of examples, the insulating adapter comprises a first stress tolerance; and the second adapter comprises a second stress tolerance higher than the first stress tolerance. In some example welding systems of the second group of examples, the welding system further includes an alignment pin, wherein: the first adapter further comprises a first alignment hole; the second adapter further comprises a second alignment hole; and the first and second alignment holes are configured to align the first adapter and the second adapter when the alignment pin extends through the first and second alignment holes.

In some example welding systems of the second group of examples, the intermediate lock comprises a compression fitting. In some example welding systems of the second group of examples, the intermediate lock comprises a tapered seat configured to hold both the first tapered extension of the first adapter and the second tapered extension of the second adapter when the first adapter and the second adapter are fastened together by the intermediate lock. In some example welding systems of the second group of examples, the intermediate lock is a split clamp comprising a first section and a second section bolted together by one or more clamp bolts. In some example welding systems of the second group of examples, the intermediate lock comprises a fastening clamp comprising a cam lock configured to close the fastening clamp. In some example welding systems of the second group of examples, the intermediate lock comprises a first quarter turn component and a second quarter turn component configured to fasten to the first quarter turn component by being turned. In some example welding systems of the second group of examples, the intermediate lock comprises a fastening clamp comprising a hinge configured to pivotally couple a first section of the fastening clamp to a second section of the fastening clamp.

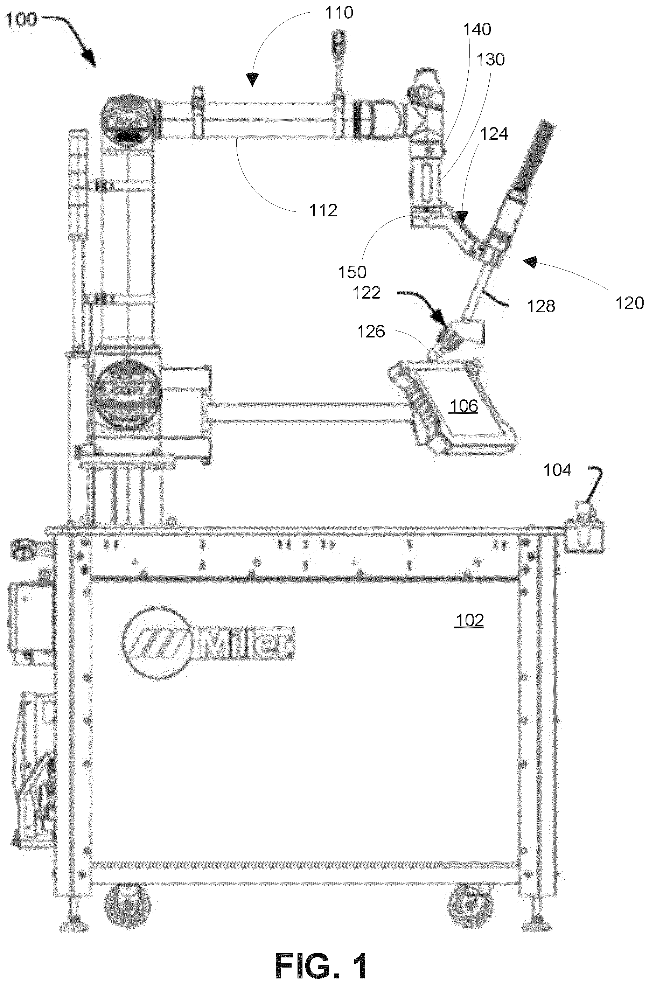

FIG. 1 illustrates an example robotic welding system 100 including a robotic manipulator 110, a torch assembly 120, and an auxiliary device 130. The example robotic manipulator 110 is a six-axis robotic manipulator, such as a conventional six-axis robotic manipulator or a thru-arm six- axis robotic manipulator. However, disclosed examples may be used with other types of robotic manipulators. The robotic manipulator 110 is electrically and/or mechanically coupled to the torch assembly 120 such that the robotic manipulator 110 and/or an operator may position and/or operate a welding torch 122 of the torch assembly 120 during welding operations.

The robotic welding system 100 is mounted on a work surface 102 (e.g., a table, astand, a rack, or any other type of work surface). In some examples, the robotic welding system 100 may perform a welding operation on a work piece (not pictured) positioned on and/or removably fixed to the work surface 102 (e.g., clamped). The robotic welding system 100 may include control inputs 104 and/or a user interface 106 to inform and/or enable an operator to control the robotic welding system 100. However, in some examples, the robotic manipulator 110 and/or control circuitry controlling the robotic manipulator 110 may be programmed to and/or controllable to conduct a welding operation autonomously (e.g., without human input during operation) and/or semi-autonomously (e.g., controlled partially by human input).

In some examples, the auxiliary device 130 includes a clutch used as a through-arm clutch in movement of the robotic manipulator 110 and/or the welding torch 122. The auxiliary device 130 may include a spacer for use in, for example, a machine vision system of the welding system 100. In some examples, a spacer is included in the robotic welding system 100 to provide a mounting surface and/or a mounting mechanism to which a machine vision system is removably mounted (by, e.g., bolts and/or other fasteners). In some examples, a machine vision system may be integrally formed with a spacer of the auxiliary device 130. In some examples, the auxiliary device 130 comprises a machine vision system. The auxiliary device 130 may include a remote control device with one or more inputs and/or one or more outputs, such as to allow for lead- through teaching or other control of the robotic welding system 100.

When conducting a welding operation, the welding torch 122 generates a welding arc near a nozzle 126 using electrode wire, welding current, and shielding gas delivered to the welding torch 122. The torch assembly 120 further includes a neck 128 to position the nozzle 126 with respect to the welding torch 122.

To control the welding torch 122, the robotic manipulator 110 is mechanically coupled to the torch assembly 120 and, in the example of FIG. 1, the intermediate component 130 positioned therebetween. Accordingly, in the example of FIG. 1, an arm section 112 of the robotic manipulator 110 is coupled to the intermediate component 130 by a first coupling system 140, and the intermediate component 130 is coupled to a torch connector 124 of the torch assembly 120 (for example, a connecting end of the welding torch 122 and/or a connecting component of the torch assembly 120 and/or the welding torch 122) by a second coupling system 150. In someexamples, either or both of the coupling systems 140, 150 are quick change robotic coupling systems, examples of which are described in further detail elsewhere herein.

In examples (and as described in further detail elsewhere herein), the robotic welding system 100 includes no auxiliary devices 130 (such that the robotic manipulator 110 is directly coupled to the torch assembly 120), one auxiliary device 130 (as in FIG. 1), two auxiliary devices 130 (e.g., a clutch and a spacer or machine vision system), or even three or more intermediate components 130.

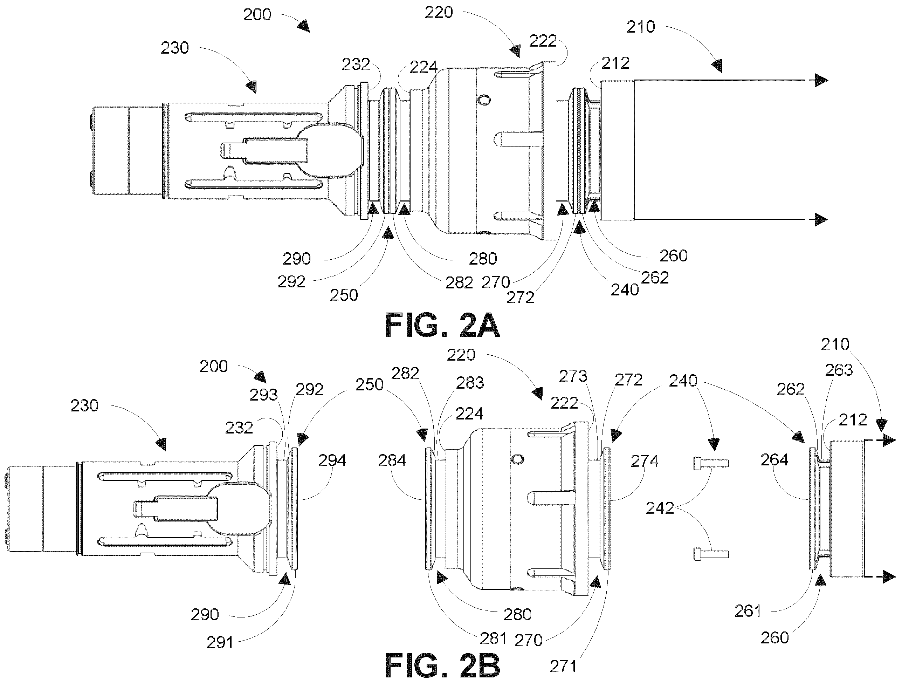

FIGS. 2A and 2B illustrate assembled and exploded views of a portion of a welding system 200, which includes a robotic manipulator 210, an auxiliary device 220 (for example, a clutch, a machine vision system, and/or a spacer), and a torch connector 230 (for example, a welding torch or a connecting component of a torch assembly). In the example of FIGS. 2A and 2B, a first quick change robotic coupling system 240 couples the robotic manipulator 210 to the auxiliary device 220, and a second quick change robotic coupling system 250 couples the auxiliary device 220 to the torch connector 230.

The example first quick change robotic coupling system 240 includes a first adapter 260, positioned on a robotface 212 of the robotic manipulator 210, and a second adapter 270, positioned on a first connector face 222 of the auxiliary device 220.

In the example of FIGS. 2A and 2B, the first adapter 260 includes a first tapered extension 261, and the first tapered extension 261 defines a first tapered face 262 extending outwardly from a first outwardly-facing surface 263 of the first adapter 260. Similarly, in the example of FIGS. 2A and 2B, the second adapter 270 includes a second tapered extension 271, and the second tapered extension 271 defines a second tapered face 272 extending outwardly from a second outwardly-facing surface 273 of the second adapter 270. Each of the first tapered extension 261, the first tapered face 262, the outwardly-facing surface 263, the second tapered extension 271, the second tapered extension 271, and the second tapered face 272 extend around a circumference of the first adapter 260 and the second adapter 270. However, the circumferences of any of the first tapered extension 261, the first tapered face 262, the outwardly-facing surface 263, the second tapered extension 271, the second tapered extension 271, and/or the second tapered face 272 may be non- contiguous and/or interrupted by gaps for fasteners, alignment features, and/or any other features.

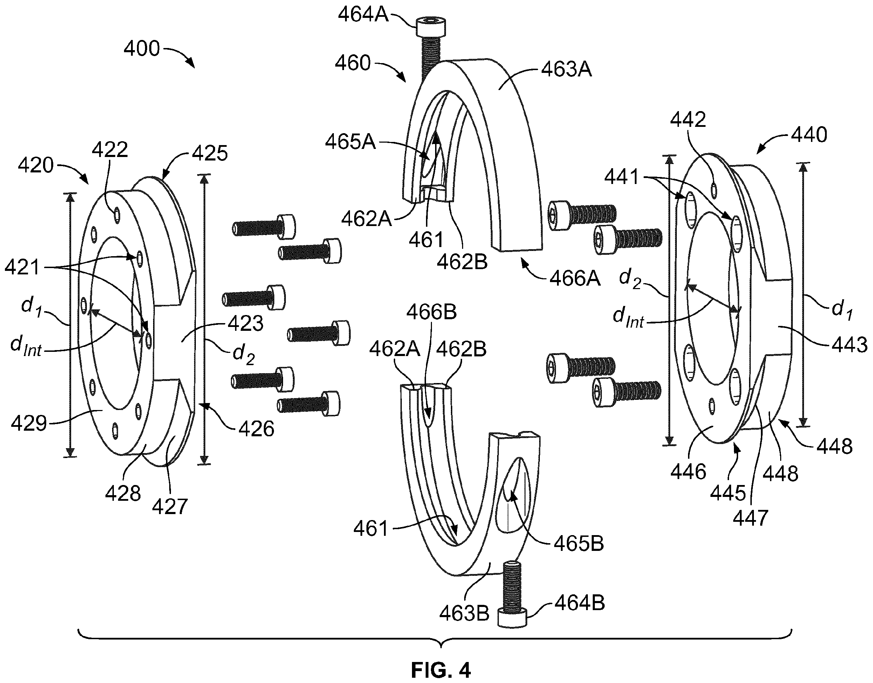

The first tapered extension 261 defines a first interior abutment face 264 opposite the first tapered face 262, and the second tapered extension 271 defines a second interior abutment face 274 opposite the second tapered face 272. In some examples, to couple the robotic manipulator 210 to the auxiliary device 220, an intermediate lock of the first quick change robotic coupling system 240 (disclosed below with reference to FIG. 4) couples and secures the first tapered extension 261 of the first adapter 260 to the second tapered extension 271 of the second adapter 270. When the first quick change robotic coupling system 240 is assembled, the robot face 212 faces the first connector face 222 and is locked or substantially locked in position relative to the first connector face 222. In examples, to assemble the first quick change robotic coupling system 240, the first interior abutment face 264 is brought to engage the second interior abutment face 274 such that an intermediate lock may, in an unlocked configuration, be brought to surround the tapered extensions 261, 271, contact the tapered faces 262, 272, and/or otherwise engage the tapered extensions 261, 271 such that, when subsequently locked,the intermediate lock fastens the tapered extensions 261, 271 together (e.g., by exerting a clamping force and/or a compression force on the tapered faces 262, 272).

The second quick change robotic coupling system 250 includes a third adapter 280, positioned on a second connector face 224 of the auxiliary device 220, and a fourth adapter 290, positioned on a torch connector face 232 of the torch connector 230. The second quick change robotic coupling system 250 has a similar configuration to the first quick change robotic coupling system 240. As with the first quick change robotic coupling system 240, the adapters 280, 290 of the second quick change robotic coupling system 250 have tapered extensions 281, 291, respectively, extending outwardly from a third outwardly-facing surface 283 of the third adapter 280 and a fourth outwardly-facing surface 293 of the fourth adapter 290, respectively. Similarly to the first quick change robotic coupling system 240, respective tapered faces 282, 292 and respective interior abutment faces 284, 294 of the adapters 280, 290 can be engaged by an intermediate lock of the second quick change robotic coupling system 250 to couple or secure the interior abutment faces 284, 294 together, thereby coupling the torch connector 230 to the auxiliary device 220. When the second quick change robotic coupling system 250 is assembled, the torch face 232 faces the second connector face 224 and is locked or substantially locked in position relative to the second connector face 224. In examples, either of the quick change robotic coupling systems 240, 250 may be replaced with, for example, other coupling systems without affecting the coupling of the other of the quick change robotic coupling systems 240, 250.

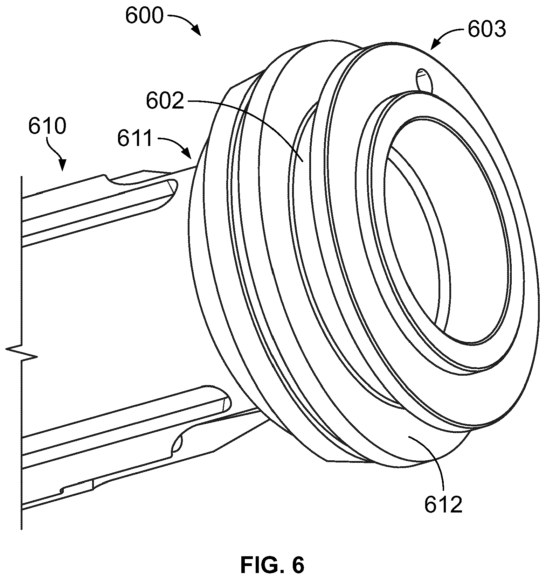

The example adapters 260, 270, 280, 290 are coupled (e.g., via fasteners) to a respective one of the faces 212, 222, 224, 232. In examples (and as described in further detail elsewhere herein), any, some, or all of the adapters 260, 270, 280, 290 are integrally formed from (by, for example, being machined into and/or integrated into) a respective one or more of the faces 212, 222, 224, 232 (such as, for example, the example adapter depicted in FIG. 6).

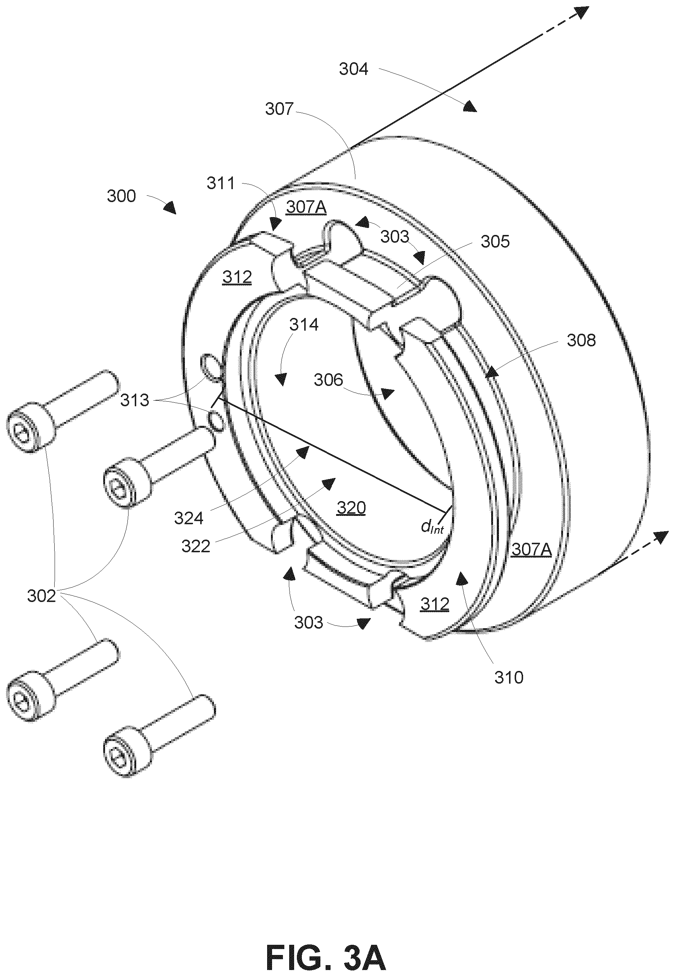

FIG. 3A depicts an example adapter 300 that may be used to implement any of the adapters of FIGS. 1, 2A, 2B, 5, 7A, 7B, and/or 7C. The example adapter 300 is formed from one or more adapter materials. In some examples (e.g., the connecting component 304 is a robotic manipulator and/or a component of a robotic manipulator), the adapter 300 is an insulating material configured to prevent or inhibit an electric potential from traveling through the adapter 300 to either or both of the connecting component 304 and/or a component to which a quick change robotic coupling system including the adapter 300 couples the connecting component 304. Accordingly, in some examples, the adapter 300 is formed from one or more insulating materials such as insulating or dielectric plastics, polymers, and/or any other materials which do not transmit or substantially limit the transmission of electric current. In other examples (e.g., a different adapter in a set of coupling adapters is an insulating adapter), the adapter 300 is not insulating. In examples, the adapter 300 may be formed from a metal, a polymer, a plastic, and/or another material.

The example adapter 300 includes fasteners 302 (for example, bolts or screws) which, when the adapter 300 is assembled, extend through respective ones of a plurality of fastening holes 303 (defined by the adapter 300) to fasten the adapter 300 to a connecting component 304 (e.g., a robotic manipulator, a torch connector, a welding torch, a clutch, a machine vision system, and/or a spacer) of a welding system. The adapter 300 may be readily attached or detached to the connecting component 304 by inserting or removing the fasteners 302 (e.g., by screwing/unscrewing the fasteners 302). By, in examples, making the fasteners 302 easily accessible and/or easy to insert and/or remove, attachment and detachment of the adapter 300, as well as assembly and disassembly of a quick change robotic coupling system including the adapter 300, may be quickly accomplished and/or require little complexity. Usage of the adapter 300 reduces downtime involved with replacement when a component (e.g., the adapter 300 itself) breaks or is damaged.

In some examples, the adapter 300 may be designed to have a stress tolerance lower than stress tolerances of other components of a quick change robotic coupling system and/or welding system of which the adapter 300 is a component. The stress tolerance may be described as a stress rating for shocks, impulses, impacts, or other such stress which the adapter 300 can withstand before being expected to suffer damage or experience substantial risk of suffering damage. In the event of a break at the adapter 300, the adapter 300 is easily accessed, removed, and replaced at the connecting component 304. By improving access to the connecting component 304 as disclosed herein, the adapter 300 reduces the complexity of and/or the time necessary to repair a damaged welding system and/or quick change robotic coupling system including the adapter 300.

In an example, and referring to FIGS. 2A-3A, the first adapter 260 attached to the robotic manipulator 210 is configured as the adapter 300 and as an insulating adapter, while the adapters 270, 280, 290 are non-insulating adapters. In some such examples, the first adapter 260 has a first stress tolerance, and each of the adapters 270, 280, 290 have stress tolerances higher than thefirst stress tolerance of the first adapter 260. Accordingly, stress experienced by the welding system 200 (e.g., caused by a heavy impact or collision to the robotic manipulator 210, the auxiliary device 220, the torch connector 230, the first quick change robotic coupling system 240, and/or the second quick change robotic coupling system 250) is most likely to break the adapter 260 having the lowest stress tolerance. Replacement of the damaged adapter 260 may involve merely separating the adapters 260, 270,replacing the first adapter 260, and reattaching the adapters 260, 270. The example quick change robotic coupling systems 240, 250 simplify repair processes, reduce numbers of potential replacement parts, and reduce downtime of the welding system 100 caused by such damage. Additionally, the insulating quality of the example first adapter 260 insulates or substantially insulates the robotic manipulator 210 from electrical potentials present at the welding torch. Any or all of the adapters 260, 270, 280, 290 may be insulating or non-insulating adapters.

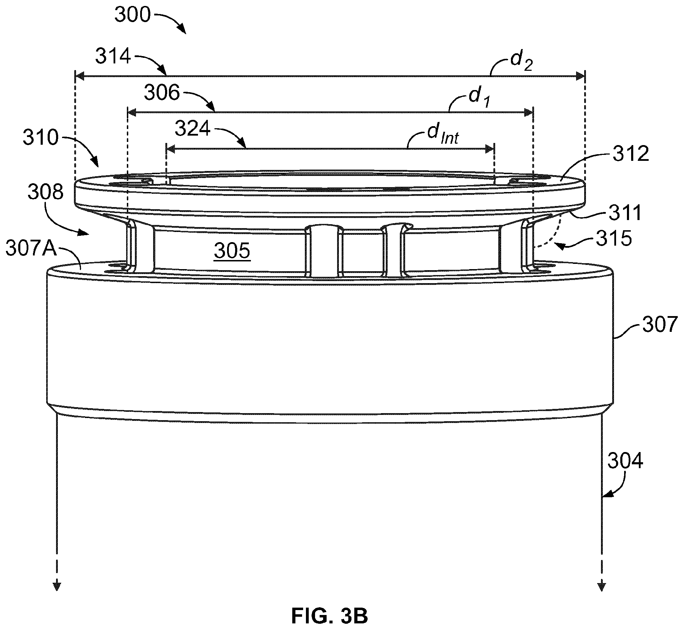

Referring now to the examples of FIGS. 3A and 3B, the adapter 300 includes an outwardly-facing surface 305 which defines a first outside diameter 306 (*d1*). In this example, the adapter 300 further includes a tapered extension 310 extending from the first outside diameter 306 (*d1*). The tapered extension 310 defines a second outside diameter 314 (d2) greater than the first outside diameter 306 (*d1*), such that the tapered extension 310 extends beyond the outwardly-facing surface 305. In examples, the tapered extension 310 includes a tapered face 311 which, in certain such examples, defines, with the outwardly-facing surface 305, a tapering angle 315. In the example of FIGS. 3A and 3B, the tapered extension 310 defines an interior abutment face 312 opposite the tapered face 311 and configured to engage with an abutment face of another adapter of a quick change robotic coupling system including the quick change adapter 300. In some examples, the adapter 300 may be aligned with another adapter by aligning alignment holes 313 (e.g., extending through the tapered extension 310) with similarly sized alignment holes of an opposing adapter. One or more alignment pins may be extended through the alignment holes 313 and the alignment holes of the opposing adapter to align the adapter 300 with the opposing adapter. In addition to and/or instead of the alignment holes 313, in some examples the adapter 300 may include integral mating features to align the adapter 300 with an opposing adapter.

In the examples of FIG. 3A and 3B, the adapter 300 includes an elongate body 307 positioned at an end of the outwardly-facing surface 305 opposite the tapered extension 310 and extending toward the connecting component 304. The elongate body 307 defines a body surface 307A facing the tapered extension 310. In the illustrated example of FIG. 3A, the tapered extension 310 extends partially about a circumference of the adapter 300. In the illustrated example of FIG. 3B, the tapered extension 310 extends wholly about the adapter 300. Accordingly, in both examples, the tapered extension 310 and the body surface 307A define a channel 308. In some examples, the channel 308 extends partially or wholly about a circumference of the adapter 300. In some other examples, the adapter 300 does not include the elongate body 307, and/orthe tapered extension 310 extends wholly about the adapter 300 (as in the example of FIG. 6). Accordingly, in such examples, the tapered extensions 310 and the outwardly-facing surface 305 define a lip and/or spacing extending partially or wholly about the adapter 300, and do not define the channel 308.

In the examples of FIGS. 3A and 3B, the adapter 300 includes interior walls 320,which, in this example, define an interior spacing 322 having an interior diameter 324 (*d_{Int}*)*.* The interior spacing 322 permits passage of cables, electrode wire, conduit, hoses, and/or any other conveyance media. In examples, the interior abutment face 312 extends from the interior diameter 324 (*d_{Int}*) to the second outside diameter 314 (*d₂*)*.*

Referring now to FIG. 4, a quick change robotic coupling system 400 includes a first adapter 420, a second adapter 440, and an intermediate lock 460 configured to couple the first adapter 420 to the second adapter 440. Either or both of the adapters 420, 440 are examples which may be used to implement any or all of the adapters of FIGS. 1, 2A, 2B, 7A, 7B, and/or 7C. In examples of FIG. 4, the first adapter 420 is a non-insulating adapter and the second adapter 440 is an insulating adapter. However, in other examples, either or both of the adapters 420, 440 may be insulating or non-insulating adapters.

The example first adapter 420 includes fastening holes 421, and the second adapter 440 includes fastening holes 441. The fastening holes 421, 441, and corresponding fasteners, couple the adapters 420, 440 to a corresponding structure of the robotic welding system 100 to be assembled (e.g., to the welding torch 122, to an auxiliary device 130, to the robotic manipulator 110, etc.). The adapters 420, 440 each include alignment holes 422, 442, respectively, positioned at opposing positions on a first interior abutment face 426 of the first adapter 420 and on a second interior abutment face 446 of the second adapter 440, respectively. Each of the example adapters 420, 440 includes flat sides 423, 443 on a circumference of the adapter 420, 440.

The first adapter 420 includes a first tapered extension 425 extending from a first outside diameter (*d1*) to a second outside diameter (d2) of the first adapter 420. The second adapter 440 includes a second tapered extension 445 extending from a first outside diameter (*d1*) to a second outside diameter (d2) of the second adapter 440. In the example of FIG. 4, the first tapered extension 425 defines the first interior abutment face 426 (extending from an interior diameter (*d_{Int}*) to the second outside diameter (d2) of the first adapter 420), and the second tapered extension 445 defines the second interior abutment face 446 (extending from an interior diameter (*d_{Int}*) to the second outside diameter (d2) of the second adapter 440).

The intermediate lock 460 is configured to couple the first adapter 420 to the second adapter 440 by fastening the first tapered extension 425 against the second tapered extension445. To this end, the intermediate lock 460 is divided into two sections 463A, 463B, each of which includes a tapered seat 461. The tapered seat 461 is defined by a first lip 462A and a second lip 462B of the intermediate lock 460. The lips 462A, 462B of the intermediate lock 460 are each shaped to conform to a tapering angle of each of the tapered extensions 425, 445, respectively. As the two sections 463A, 463B are forced together using the fasteners 464A, 464B, the tapered seats 461 of the intermediate lock 460 fasten the first tapered extension 425 together with the second tapered extension 445, and the first interior abutment face 426 is seated against the second interior abutment face 446.

Different example adapters may differ in qualities such as numbers of and positions of fastening and alignment holes, shape, dimensions, and other qualities, while retaining tapered extensions extending partially or wholly about such adapters and, thereby, operability with intermediate locks described herein, such as the intermediate lock 460. For example, adapters disclosed and contemplated herein may have square or substantially square shapes, elliptical or substantially elliptical shapes, and/or any other shapes having any dimensions.

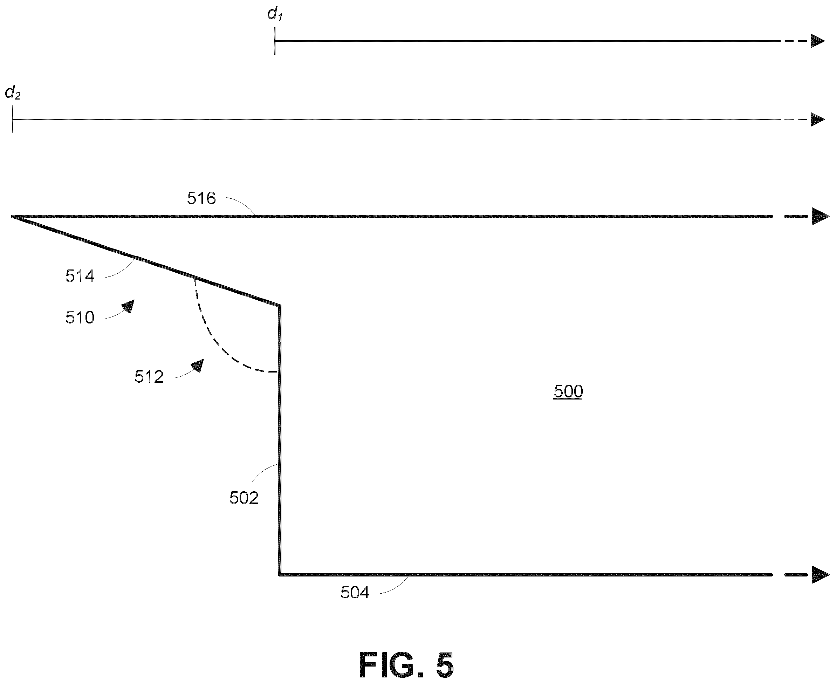

FIG. 5 illustrates an example adapter 500 that may be used to implement portions of any of the adapters of FIGS. 1, 2A, 2B, 3A, 3B, 4, 7A, 7B, and/or 7C. The example adapter500 having a tapered extension 510 which defines a tapering angle 512. As illustrated in FIG. 5, the tapered extension 510 is positioned between an interior abutment face 516 and an exterior abutment face 504 of the adapter 500. An outwardly-facing surface 502 of the adapter 500 and a tapered surface 514 of the tapered extension 510 define the tapering angle 512. In some examples, the tapering angle may be greater than or equal to 120 degrees and less than 180 degrees.

Returning to FIG. 4, the first tapered extension 425 is positioned between the interior abutment face 426 and a first exterior abutment face 429 of the first adapter 420. A first outwardly-facing surface 428 of the first adapter 420 and a first tapered face 427 of the first tapered extension 425 define a first tapering angle of the first adapter 420. Similarly, the second tapered extension 445 is positioned between the interior abutment face 446 and a second exterior abutment face 449 of the second adapter 440). A second outwardly-facing surface 448 of the second adapter 440and a second tapered face 447 of the second tapered extension 445 define a second tapering angle of the second adapter 440. In the example of FIG. 4, the example respective tapering angles of the tapered extensions 425, 445 have opposing angles with respect to the interior abutment faces426, 446.

The tapered seat 461 of the example intermediate lock 460 is shaped to conform to the respective tapering angles of the tapered extensions 425, 445. In other examples, the tapered seat 461 may include a different angle or may be replaced with a non-tapered seat (e.g. stepped) configured to apply radial force to the tapered extensions 425, 445 to urge the adapters 420, 440 into contact. When secured, the intermediate lock 460 fastens the adapters 420, 440 together, and thereby fastens together components (e.g., a robotic manipulator, a torch connector, a welding torch, a clutch, a machine vision system, and/or a spacer) coupled to respective ones of the exterior abutment faces 429, 449.

Any of the adapters of FIGS. 1, 2A, 2B, 3A, 3B, 4, 7A, 7B, and/or 7C may be coupled by the intermediate lock 460 and/or other intermediate locks described and contemplated herein. In the example of FIG. 4, the intermediate lock 460 is configured as a fastening clamp and, more particularly, a split clamp comprising a first section 463A and a second section 463B bolted together by a first clamp bolt 464A and a second clamp bolt 464B. In the example of FIG. 4, the first clamp bolt 464A extends through a first bolt hole 465A of the first section 463A and into a second receiving hole 466B of the second section 463B to secure the first section 463A to the second section 463B. Similarly, in this example, the second clamp bolt 464B extends through a second bolt hole 465B of the second section 463B and into a first receiving hole 466A of the second section 463B to further secure the first section 463A to the second section 463B. However, in other examples, the sections 463A, 463B may be secured by no clamp bolts, one clamp bolt,or even three or more clamp bolts.

In some examples, the intermediate lock 460 may include a hinge to pivotally couple the sections 463A, 463B. In some such examples, the hinge may replace one of the clamp bolts 464A, 464B, while the other of the clamp bolts 464A, 464B fastens the sections 463A, 463B together. In some examples, the intermediate lock 460 includes one or more cam locks to close the intermediate lock 460. In some examples, the sections 463A, 463B of the intermediate lock 460 are quarter turn components configured to fasten together by being turned. In some examples, the intermediate lock 460 is a compression fitting which applies a force to each of the tapered faces 427, 447 to fasten the first adapter 420 to the second adapter 440. In some examples, the intermediate lock 460 is a fastening nut which, for example, fastens the adapters 420, 440 together by turning.

FIG. 6 depicts an example integrally formed adapter 600 integrally formed at a connectingend 611 of a connecting component 610 (e.g., a robotic manipulator, a torch connector, a welding torch, a remote control device, a clutch, a machine vision system, and/or a spacer)such that an outwardly-facing surface 601 of the integrally formed adapter 600 extends directly from a connecting face 612 of the connecting component 610. Some or all of the integrally formed adapter 600 may be formed by, for example, molding the connecting end 611 of the connecting component 610. In other examples, some or all of the integrally formed adapter 600 may be machined into the connecting end 611 of the connecting component 610 or the connecting face 612 of the connecting component 610. In the illustrated example, the integrally formed adapter 600 is formed from the same material as the connecting component 610 and/or the connecting face 612. However, the connecting component 610 may be formed from one or more different material(s) than connecting end 611 and/or the connecting face 612. For example, the integrally formed adapter 600 may be molded onto the connecting face 612. Accordingly, the integrally formed adapter 600 may be an insulating adapter or a non-insulating adapter.

Aside from being integrally formed from the connecting component 610, the integrally formed adapter 600 and a tapered extension 603 of the integrally formed adapter 600 may, in various examples, be similarly configured and/or varied as described above with respect to the adapters of any, some, or all of FIGS. 1, 2A, 2B, 3A, 3B, and/or 5. For example, the integrally formed adapter 600 may vary with respect to number and/or position of alignment holes, tapering angles, extension of the tapered extension 603 partially or wholly about a circumference of the integrally formed adapter 600, shape(s) of the integrally formed adapter 600 and/or components of the integrally formed adapter600, and/or other features, qualities, and/or other aspects described elsewhere herein with respect to the adapters of any, some, or all of FIGS. 1, 2A, 2B, and/or 5.

The example integrally formed adapter 600 may be used to implement any, some, or all of the adapters of FIGS. 1, 2A, 2B, 5, 7A, 7B, and/or 7C. Further, in certain examples, the integrally formed adapter 600 may be used in the same quick change robotic coupling system as a non-integrally formed adapter (e.g., the adapter 300). Referring to FIGS. 2A and 2B, either or both of the adapters 260, 270 of the first quick change robotic coupling system 240 may be configured as an integrally formed adapter (e.g., the integrally formed adapter 600) formed from or onto the robot face 212 or the first connector face 222, respectively, and/or as a non-integrally formed adapter (e.g., the adapter 300) attached to the robot face 212 or the first connector face 222, respectively. Similarly, either or both of the adapters 280, 290 of the second quick change robotic coupling system 250 may be configured as an integrally formed adapter (e.g., the integrallyformed adapter 600) formed from or onto the second connector face 224 or the torch connector face 232, respectively, and/or as a non-integrally formed adapter (e.g., the adapter 300) attached to the second connector face 224 or the torch connector face 232, respectively.

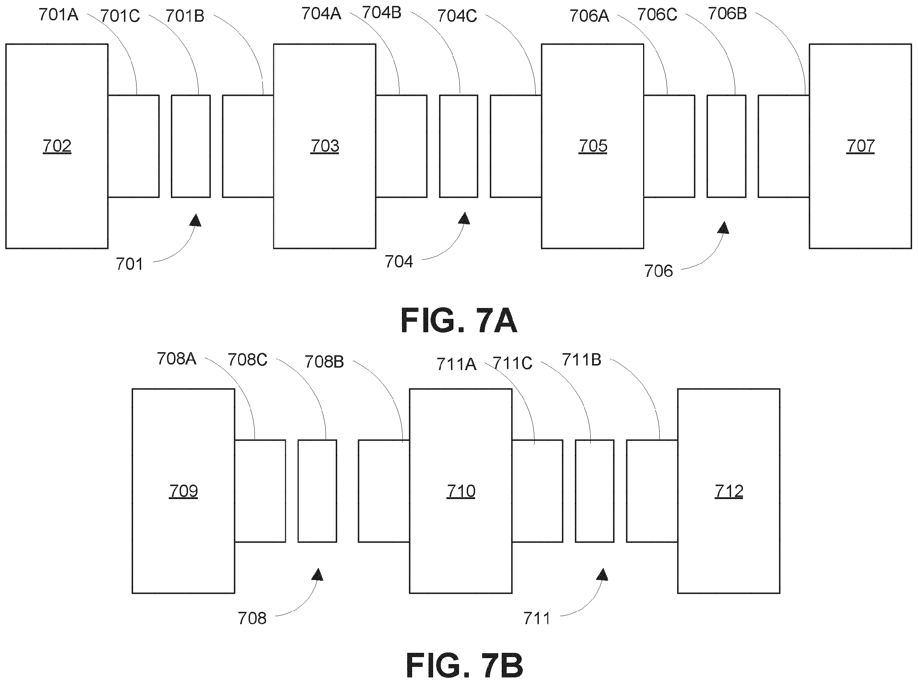

Referring to FIGS. 7A-7C, any, some, or all of the adapters and associated quick change robotic coupling systems described herein (for example, the adapter 300 and/or the integrally formed adapter 600) may be used singularly or in any plurality to connect various components described herein in any series, plurality, and/or combination.

For example, a welding system illustrated in FIG. 7A includes a first coupling system 701 coupling a first component 702 to a second component 703, a second coupling system 704 coupling the second component 703 to a third component 705, and a third coupling system 706 coupling the third component 705 to a fourth component 707. Any, some, or all of the components 702, 703, 705, 707 may be and/or include a robotic manipulator, one or more sections of a robotic manipulator, a torch connector, a welding torch, a machine vision system, a spacer, and/or a clutch. Any, some, or all of the coupling systems 701, 704, 706 may be quick change robotic coupling systems.

In an example, the first coupling system 701 is a quick change robotic coupling system including a first adapter 701A, a second adapter 701B, and a first intermediate lock 701C to fasten the first adapter 701A to the second adapter 701B. In this example, the second coupling system 704 is a quick change robotic coupling system including a third adapter 704A, a fourth adapter 704B, and a second intermediate lock 704C to fasten the third adapter 704A to the fourth adapter 704B. In this example, the third coupling system 706 is a quick change robotic coupling system including a fifth adapter 706A, a sixth adapter 706B, and a third intermediate lock 706C to fasten the fifth adapter 706A to the sixth adapter 706B. Any, some, or all of the adapters 701A, 701B, 704A, 704B, 706A, 706B may be configured as non-integrally formed adapters (e.g., the adapter 300), integrally formed adapters (e.g., the integrally formed adapter 600), and/or other configurations of adapters disclosed and/or contemplated herein. Any, some, or all of the adapters 701A, 701B, 704A, 704B, 706A, 706B may be configured as insulated or non-insulated adapters. Any, some, or all of the intermediate locks 701, 704, 706 may be configured as the intermediate lock 460 and/or as other intermediate locks disclosed and/or contemplated herein.

In an example, the first component 702 is a robotic manipulator, the second component 703 is a spacer, the third component 705 is a clutch, and the fourth component 707 is a welding torch and/or a torch connector. The first adapter 701A is an insulating adapter configured as a non-integrally formed adapter (e.g., the adapter 300), the second adapter 701B is a non-insulating adapter configured as an integrally formed adapter (e.g., the integrally formed adapter 600), the third adapter 704A is a non-insulating adapter configured as an integrally formed adapter, the fourth adapter 704B is a non-insulating adapter configured as an integrally formed adapter, the fifth adapter 706A is a non-insulating adapter configured as an integrally formed adapter, and the sixth adapter 706B is a non-insulating adapter configured as an integrally formed adapter.

An example welding system illustrated in FIG. 7B includes a first coupling system 708 coupling a first component 709 to a second component 710 and a second coupling system 711 coupling the second component 710 to a third component 712. Any, some, or all of the components 709, 710, 712 may be and/or include a robotic manipulator, one or more sections of a robotic manipulator, a torch connector, aweldingtorch, a spacer, a machine vision system, and/or a clutch. Either or both of the coupling systems 708, 711 may be quick change robotic coupling systems.

In an example, the first coupling system 708 is a quick change robotic coupling system including a first adapter 708A, a second adapter 708B, and a first intermediate lock 708C to fasten the first adapter 708A to the second adapter 708B. In this example, the second coupling system 711 is a quick change robotic coupling system including a third adapter 711A, a fourth adapter 711B, and a second intermediate lock 711C to fasten the third adapter 711A to the fourth adapter 711B. Any, some, or all of the adapters 708A, 708B, 711A, 711B may be configured as non-integrally formed adapters (e.g., the adapter 300), integrally formed adapters (e.g.,, the integrally formed adapter 600), and/or other configurations of adapters disclosed and/or contemplated herein. Any of the adapters 708A, 708B, 711A, 711B may be configured as insulated or non-insulated adapters. Either or both of the intermediate locks 708C, 711C may be configured as the intermediate lock 460 and/or as other intermediate locks disclosed and/or contemplated herein.

In an example, the first component 709 is a robotic manipulator, the second component 710 is a spacer, a machine vision system, and/or a clutch, and the third component 705 is a welding torch and/or a torch connector. The first adapter 708A is an insulating adapter configured as a non-integrally formed adapter (e.g., the adapter 300), the second adapter 708B is a non-insulating adapter configured as an integrally formed adapter (e.g., the integrally formed adapter 600), the third adapter 711A is a non-insulating adapter configured as an integrally formed adapter, and the fourth adapter 711B is a non-insulating adapter configured as an integrally formed adapter.

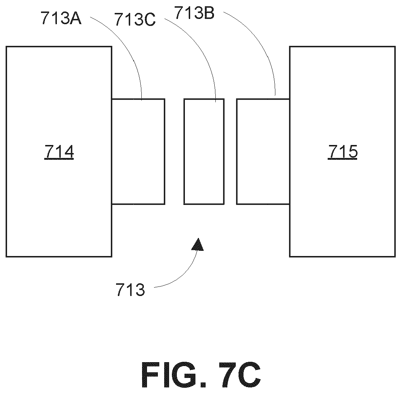

An example welding system illustrated in FIG. 7C includes a coupling system 713 coupling a first component 714 to a second component 715. Either or both of the components 714, 715 may be and/or include a robotic manipulator, one or more sections of a robotic manipulator, a torch connector, a welding torch, a spacer, a machine vision system, and/or a clutch.

In an example, the coupling system 713 is a quick change robotic coupling system including a first adapter 713A, a second adapter 713B, and an intermediate lock 713C to fasten the first adapter 713A to the second adapter 713B. Either or both of the adapters 713A, 713B may be configured as non-integrally formed adapters (e.g., the adapter 300), integrally formed adapters (e.g., the integrally formed adapter 600), and/or other configurations of adapters disclosed and/or contemplated herein. Either or both of the adapters 713A, 713B may be configured as insulated or non-insulated adapters. The intermediate lock 713C may be configured as the intermediate lock 460 and/or as any of other intermediate locks disclosed and/or contemplated herein.

In an example, the first component 714 is a robotic manipulator and the second component 715 is a welding torch and/or a torch connector. The first adapter 713A is an insulating adapter configured as a non-integrally formed adapter (e.g., the adapter 300) and the second adapter 713B is a non-insulating adapter configured as an integrally formed adapter (e.g., the integrally formed adapter 600).

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example,"x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses.
Clause 1 : A quick change coupling system configured to couple components of a welding system, the quick change coupling system comprising:
   a first adapter comprising a first tapered extension extending from a first outside diameter of the first adapter, the first tapered extension defining a second outside diameter of the first adapter greater than the first outside diameter of the first adapter;
   a second adapter comprising a second tapered extension extending from a third outside diameter of the second adapter, the second tapered extension defining a fourth outside diameter of the second adapter greater than the third outside diameter of the second adapter; and
   an intermediate lock configured to couple the first adapter and the second adapter by fastening the first tapered extension of the first adapter together with the second tapered extension of the second adapter.
Clause 2 : The quick change coupling system of clause 1, wherein:
   the first adapter defines a first outwardly-facing surface at the first outside diameter; the first tapered extension comprises a first tapered face; and
   the first tapered face and the first outwardly-facing surface define a first tapering angle.
Clause 3 : The quick change coupling system of clause 2, wherein the first tapering angle is greater than or equal to 120 degrees and less than 180 degrees.
Clause 4 : The quick change coupling system of clause 2, wherein:
   the second adapter defines a second outwardly-facing surface at the second outside diameter;
   the second tapered extension comprises a second tapered face;
   the second tapered face and the second outwardly-facing surface define a second tapering angle; and
   the intermediate lock engages with the first tapered face of the first adapter and the second tapered face of the second adapter when the intermediate lock fastens the first tapered extension together with the second tapered extension.
Clause 5 : The quick change coupling system of clause 1, wherein:
   the first adapter defines a first interior diameter and a first interior abutment face extending from the first interior diameter to the second outside diameter;
   the second adapter defines a second interior diameter and a second interior abutment face extending from the second interior diameter to the fourth outside diameter; and
   the intermediate lock is configured to lock the first interior abutment face to the second interior abutment face.
Clause 6 : The quick change coupling system of clause 5, wherein, when the intermediate lock fastens the first tapered extension together with the second tapered extension, the first interior abutment face is seated against the second interior abutment face.
Clause 7 : The quick change coupling system of clause 1, wherein the first adapter is an insulating adapter.
Clause 8 : The quick change coupling system of clause 7, wherein: the insulating adapter comprises a first stress tolerance; and
   the second adapter comprises a second stress tolerance higher than the first stress tolerance.
Clause 9 : The quick change coupling system of clause 1 further comprising an alignment pin, wherein:
   the first adapter further comprises a first alignment hole;
   the second adapter further comprises a second alignment hole; and
   the first and second alignment holes are configured to align the first adapter and the second adapter when the alignment pin extends through the first and second alignment holes.
Clause 10: The quick change coupling system of clause 1, wherein the intermediate lock comprises a compression fitting.
Clause 11 : The quick change coupling system of clause 1, wherein the intermediate lock comprises a tapered seat configured to hold both the first tapered extension of the first adapter and the second tapered extension of the second adapter when the first adapter and the second adapter are fastened together by the intermediate lock.
Clause 12 : The quick change coupling system of clause 1, wherein the intermediate lock is a split clamp comprising a first section and a second section bolted together by one or more clamp bolts.
Clause 13 : The quick change coupling system of clause 1, wherein the intermediate lock comprises a fastening clamp comprising a cam lock configured to close the fastening clamp.
Clause 14 : The quick change coupling system of clause 1, wherein the intermediate lock comprises a first quarter turn component and a second quarter turn component configured to fasten to the first quarter turn component by being turned.
Clause 15 : The quick change coupling system of clause 1, wherein the intermediate lock comprises a fastening clamp comprising a hinge configured to pivotally couple a first section of the fastening clamp to a second section of the fastening clamp.
Clause 16: A welding system comprising:
   a robotic manipulator comprising a robot face;
   a first adapter configured to couple to the robot face, the first adapter comprising a first tapered extension extending from a first outside diameter of the first adapter, the first tapered extension defining a second outside diameter of the first adapter greater than the first outside diameter of the first adapter;
   a first auxiliary device comprising a first connector face;
   a second adapter configured to couple to the first connector face of the first auxiliary device, the second adapter comprising a second tapered extension extending from a third outside diameter of the second adapter, the second tapered extension defining a fourth outside diameter of the second adapter greater than the third outside diameter of the second adapter; and
   a first intermediate lock configured to couple the robotic manipulator to the first auxiliary device by fastening the first tapered extension of the first adapter together with the second tapered extension of the second adapter.
Clause 17 : The welding system of clause 16, further comprising:
   a third adapter configured to couple to a second connector face of the first auxiliary device, the third adapter comprising a third tapered extension extending from a fifth outside diameter of the third adapter, the third tapered extension defining a sixth outside diameter of the third adapter greater than the fifth outside diameter of the third adapter;
   a second auxiliary device comprising a third connector face;
   a fourth adapter configured to couple to the third connector face of the second auxiliary device, the fourth adapter comprising a fourth tapered extension extending from a seventh outside diameter of the fourth adapter, the fourth tapered extension defining an eighth outside diameter of the fourth adapter greater than the seventh outside diameter of the fourth adapter; and
   a second intermediate lock configured to couple the first auxiliary device and the second auxiliary device by fastening the third tapered extension of the third adapter together with the fourth tapered extension of the fourth adapter.
Clause 18 : The welding system of clause 16, wherein the first auxiliary device comprises at least one of a torch connector, a clutch, a machine vision system, or a spacer.
Clause 19 : The welding system of clause 16, further comprising a plurality of bolts, wherein the second adapter comprises a plurality of fastening holes and each bolt of the plurality of bolts extends through a respective fastening hole of the plurality of fastening holes for connection to the first auxiliary device.
Clause 20 : A welding system comprising:
   a robotic manipulator comprising a robot face;
   a first adapter configured to couple to the robot face, the first adapter comprising a first tapered extension extending from a first diameter of the first adapter, the first tapered extension defining a second diameter of the first adapter greater than the first diameter of the first adapter;
   an auxiliary device comprising a second adapter, the second adapter comprising a second tapered extension extending from a third diameter of the second adapter, the second tapered extension defining a fourth diameter of the second adapter greater than the third diameter of the second adapter; and
   a first intermediate lock configured to couple the robotic manipulator to the auxiliary device by fastening the first tapered extension of the first adapter together with the second tapered extension of the second adapter.

## Claims

1. A quick change coupling system configured to couple components of a welding system, the quick change coupling system comprising:
a first adapter comprising a first tapered extension extending from a first outside diameter of the first adapter, the first tapered extension defining a second outside diameter of the first adapter greater than the first outside diameter of the first adapter;
a second adapter comprising a second tapered extension extending from a third outside diameter of the second adapter, the second tapered extension defining a fourth outside diameter of the second adapter greater than the third outside diameter of the second adapter; and
an intermediate lock configured to couple the first adapter and the second adapter by fastening the first tapered extension of the first adapter together with the second tapered extension of the second adapter.

2. The quick change coupling system of claim 1, wherein:
the first adapter defines a first outwardly-facing surface at the first outside diameter;
the first tapered extension comprises a first tapered face; and
the first tapered face and the first outwardly-facing surface define a first tapering angle.

3. The quick change coupling system of claim 2, wherein the first tapering angle is greater than or equal to 120 degrees and less than 180 degrees.

4. The quick change coupling system of claim 2, wherein:
the second adapter defines a second outwardly-facing surface at the second outside diameter;
the second tapered extension comprises a second tapered face;
the second tapered face and the second outwardly-facing surface define a second tapering angle; and
the intermediate lock engages with the first tapered face of the first adapter and the second tapered face of the second adapter when the intermediate lock fastens the first tapered extension together with the second tapered extension.

5. The quick change coupling system of claim 1, wherein:
the first adapter defines a first interior diameter and a first interior abutment face extending from the first interior diameter to the second outside diameter;
the second adapter defines a second interior diameter and a second interior abutment face extending from the second interior diameter to the fourth outside diameter; and
the intermediate lock is configured to lock the first interior abutment face to the second interior abutment face, and optionally, when the intermediate lock fastens the first tapered extension together with the second tapered extension, the first interior abutment face is seated against the second interior abutment face.

6. The quick change coupling system of claim 1, wherein the first adapter is an insulating adapter, and optionally, the insulating adapter comprises a first stress tolerance, and the second adapter comprises a second stress tolerance higher than the first stress tolerance.

7. The quick change coupling system of claim 1 further comprising an alignment pin, wherein:
the first adapter further comprises a first alignment hole;
the second adapter further comprises a second alignment hole; and
the first and second alignment holes are configured to align the first adapter and the second adapter when the alignment pin extends through the first and second alignment holes.

8. The quick change coupling system of claim 1, wherein the intermediate lock comprises a compression fitting.

9. The quick change coupling system of claim 1, wherein the intermediate lock comprises a tapered seat configured to hold both the first tapered extension of the first adapter and the second tapered extension of the second adapter when the first adapter and the second adapter are fastened together by the intermediate lock.

10. The quick change coupling system of claim 1, wherein the intermediate lock is a split clamp comprising a first section and a second section bolted together by one or more clamp bolts or wherein the intermediate lock comprises a fastening clamp comprising a cam lock configured to close the fastening clamp.

11. The quick change coupling system of claim 1, wherein the intermediate lock comprises a first quarter turn component and a second quarter turn component configured to fasten to the first quarter turn component by being turned or wherein the intermediate lock comprises a fastening clamp comprising a hinge configured to pivotally couple a first section of the fastening clamp to a second section of the fastening clamp.

12. A welding system comprising:
a robotic manipulator comprising a robot face;
a first adapter configured to couple to the robot face, the first adapter comprising a first tapered extension extending from a first outside diameter of the first adapter, the first tapered extension defining a second outside diameter of the first adapter greater than the first outside diameter of the first adapter;
a first auxiliary device comprising a first connector face;
a second adapter configured to couple to the first connector face of the first auxiliary device, the second adapter comprising a second tapered extension extending from a third outside diameter of the second adapter, the second tapered extension defining a fourth outside diameter of the second adapter greater than the third outside diameter of the second adapter; and
a first intermediate lock configured to couple the robotic manipulator to the first auxiliary device by fastening the first tapered extension of the first adapter together with the second tapered extension of the second adapter.

13. The welding system of claim 12, further comprising:
a third adapter configured to couple to a second connector face of the first auxiliary device, the third adapter comprising a third tapered extension extending from a fifth outside diameter of the third adapter, the third tapered extension defining a sixth outside diameter of the third adapter greater than the fifth outside diameter of the third adapter;
a second auxiliary device comprising a third connector face;
a fourth adapter configured to couple to the third connector face of the second auxiliary device, the fourth adapter comprising a fourth tapered extension extending from a seventh outside diameter of the fourth adapter, the fourth tapered extension defining an eighth outside diameter of the fourth adapter greater than the seventh outside diameter of the fourth adapter; and
a second intermediate lock configured to couple the first auxiliary device and the second auxiliary device by fastening the third tapered extension of the third adapter together with the fourth tapered extension of the fourth adapter.

14. The welding system of claim 12, wherein either the first auxiliary device comprises at least one of a torch connector, a clutch, a machine vision system, or a spacer; or the welding system further comprises a plurality of bolts, wherein the second adapter comprises a plurality of fastening holes and each bolt of the plurality of bolts extends through a respective fastening hole of the plurality of fastening holes for connection to the first auxiliary device.

15. A welding system comprising:
a robotic manipulator comprising a robot face;
a first adapter configured to couple to the robot face, the first adapter comprising a first tapered extension extending from a first diameter of the first adapter, the first tapered extension defining a second diameter of the first adapter greater than the first diameter of the first adapter;
an auxiliary device comprising a second adapter, the second adapter comprising a second tapered extension extending from a third diameter of the second adapter, the second tapered extension defining a fourth diameter of the second adapter greater than the third diameter of the second adapter; and
a first intermediate lock configured to couple the robotic manipulator to the auxiliary device by fastening the first tapered extension of the first adapter together with the second tapered extension of the second adapter.
